# EUROPÄISCHE PATENTSCHRIFT

(11) **EP 3 917 791 B1**
(45) Veröffentlichungstag und Bekanntmachung des Hinweises auf die Patenterteilung: **22.02.2023**
(21) Anmeldenummer: 19831688.7
(22) Anmeldetag: 19.12.2019
(51) Int. Cl.: B60C 11/16

(54) **FAHRZEUGLUFTREIFEN**
PNEUMATIC TYRE
PNEUMATIQUE

(30) Priorität: 01.02.2019 DE 102019201303
(43) Veröffentlichungstag der Anmeldung: 08.12.2021
(73) Patentinhaber: Continental Reifen Deutschland GmbH, 30165 Hannover (DE)
(72) Erfinder: SCHLITTENHARD, Jan, 30419 Hannover (DE); KÖTTER, Maik, 30419 Hannover (DE); SPECHTMEYER, Torben, 30419 Hannover (DE)
(74) Vertreter: Continental Corporation
(86) Internationale Anmeldenummer: PCT/EP2019/086140
(87) Internationale Veröffentlichungsnummer: WO 2020/156741

(56) Entgegenhaltungen:
- EP-A1- 3 031 628
- WO-A1-2018/210460
- DE-A1-102016 212 280

## Beschreibung

Die Erfindung betrifft einen Fahrzeugluftreifen mit einem Laufstreifen mit Profilelementen mit Spikes, welche jeweils einen in einem Profilelement verankerten Spikekörper und einen in diesem positionierten Spikepin aufweisen, wobei Spikes eines ersten Typs und eines zweiten Typs vorgesehen sind, welche sich zumindest in der Ausgestaltung ihrer Spikepins voneinander unterscheiden, wobei die Spikes des ersten Typs eine bessere Seitenkraftübertragung bewirken als die Spikes des zweiten Typs, welche eine bessere Umfangskraftübertragung bewirken als die Spikes des ersten Typs.

Es ist bekannt, dass die allgemeine Wirkungsweise von bespikten Reifen auf mehreren Effekten beruht. Zum einen dringen Spikes in auf der Fahrbahn befindliches Eis ein und verzahnen sich in diesem mechanisch. Bei Brems- und Traktionsvorgängen treten darüber hinaus Relativbewegungen (Schlupf) zwischen dem Fahrzeugluftreifen und der eisbedeckten Fahrbahn auf, bei welchen die Spikes durch das Eis gezogen werden und dabei Rinnen in die Eisoberfläche fräsen. Die dabei anfallenden Eispartikel - Eisspäne oder Eismehl - sammeln sich häufig um den jeweiligen Spike an, wodurch sowohl die Eisgriffwirkung des Spikes als auch die Eisgriffwirkung des den Spike umgebenden Gummimaterials des Laufstreifens leidet.

Um den negativen Auswirkungen der anfallenden Eispartikel entgegenzuwirken, ist es bekannt, zur Aufnahme der Eispartikel in unmittelbarer Nähe zum Spike seichte Vertiefungen als "Eisreservoire" vorzusehen. Derartige Eisreservoire sind in unterschiedlichen Ausgestaltungen bekannt.

Ein Fahrzeugluftreifen der eingangs genannten Art ist beispielsweise aus der WO 2018/210460 A1 bekannt. Der Laufstreifen des Reifens ist somit mit Spikes eines ersten und eines zweiten Typs versehen. Die Spikes des ersten und zweiten Typs unterscheiden sich voneinander in der Ausgestaltung ihrer Spikepins, wobei die Spikes des ersten Typs eine bessere Seitenkraftübertragung und Spikes des zweiten Typs eine bessere Brems- und Traktionskraftübertragung bewirken. Die Spikes sind dabei in über den Umfang des Laufstreifens umlaufenden Spikespuren angeordnet, in welchen sowohl Spikes des ersten Typs als auch Spikes des zweiten Typs vorgesehen sind. Dadurch werden die Handlingeigenschaften des Fahrzeugluftreifens optimiert.

Ein Fahrzeugluftreifen mit einem Spikes aufweisenden Laufstreifen mit als Eisreservoiren wirkenden Vertiefungen ist beispielsweise aus der DE 10 2014 225 047 A1 bekannt. Die Vertiefungen sind in Draufsicht langgestreckt, erstrecken sich in Umfangsrichtung und weisen einen über den Großteil ihrer Umfangserstreckung verlaufenden Hauptabschnitt und einen an diesen anschließenden Endabschnitt auf. Im Hauptabschnitt nehmen die Breite und die Tiefe der Vertiefungen mit zunehmender Entfernung vom Spike zu. Im Endabschnitt nehmen die Breite und die Tiefe der Vertiefungen mit zunehmender Entfernung vom Spike ab. Beim Fahren auf glattem Eis bleibt die Funktion dieser Vertiefungen als Eisreservoire erhalten, denn die Eispartikel können ungehindert vom Spike in die Bereiche der Vertiefungen mit größerer Querschnittsfläche transportiert werden.

Aus der WO 2017/071842 A1 ist ein Fahrzeugluftreifen mit einem mit Spikes versehenen, laufrichtungsgebunden ausgeführten Laufstreifen mit Profilblöcken und als Eisreservoiren wirkenden Vertiefungen bekannt. Um jeden Spike sind im Profilblock sich zumindest in die beiden Umfangsrichtungen erstreckende, langgestreckte Vertiefungen mit unterschiedlichen Volumina und unterschiedlichen Erstreckungslängen ausgebildet. Die Vertiefung(en), welche sich bei Vorwärtsfahrt vom Spike aus in Abrollrichtung erstreckt bzw. erstrecken, weist bzw. weisen, bei mehreren Vertiefungen in Summe, das größte Volumen auf. Bevorzugter Weise ist an jedem Spike zumindest eine weitere Vertiefung ausgebildet, welche sich nach axial außen, in Richtung der dem Spike näher befindlichen Reifenschulter erstreckt und welche, bei mehreren Vertiefungen in Summe, das kleinste Volumen aufweist bzw. aufweisen. Durch diese Maßnahmen sind die Volumina der Vertiefungen an die durch die unterschiedlichen Relativbewegungen zwischen Spike und Eisfahrbahn anfallenden Mengen an Eisspänen angepasst.

Die FI 126308 B offenbart einen Fahrzeugluftreifen mit einem Laufstreifen, welcher einen zentralen Laufstreifenbereich und zwei seitliche Laufstreifenbereiche aufweist, wobei im zentralen Laufstreifenbereich Spikes eines ersten Typs verankert sind, welche eine bessere Brems- und Traktionskraftübertragung bewirken als Spikes eines zweiten Typs, welche in den beiden schulterseitigen Laufstreifenbereichen verankert sind. Die Spikes der beiden Typen unterscheiden sich hinsichtlich des Querschnittes und der Querschnittsfläche ihrer Spikespins.

Aus der DE 10 2016 212 280 A1 ist ein Fahrzeugluftreifen mit einem Laufstreifen mit schulterseitigen Profilblockreihen und einem zentralen Laufstreifenbereich bekannt, wobei in den schulterseitigen Profilblockreihen Spikes eines ersten Typs und im zentralen Laufstreifenbereich Spikes eines zweiten Typs eingesetzt sind. Die Spikes weisen Spikepins mit umlaufenden Griffkanten auf, wobei der Konturverlauf der Griffkante des Spikepins des Spikes des ersten Typs vom Konturverlauf der Griffkante des Spikepins der Spikes des zweiten Typs derart abweicht, dass der Spikepin des Spikes des ersten Typs eine in die Umfangsrichtung projizierte erste Länge aufweist und der Spikepin des Spikes des zweiten Typs eine in die Umfangsrichtung projizierte zweite Länge aufweist, wobei die erste Länge größer ist als die zweite Länge. Der Spike des ersten Typs weist daher eine bessere Seitenkraftübertragung auf als der Spike des zweiten Typs.

Um die vorteilhaften Wirkungen von Spikes auf die Fahreigenschaften eines Reifens zu erhöhen, ist es daher insbesondere bekannt, als Eisreservoire wirkende Vertiefungen im Bereich der Spikes auszubilden oder den Laufstreifen mit - im Hinblick auf die Kraftübertragung zum Untergrund - verschieden wirkenden Spiketypen, welche sich insbesondere in der Geometrie ihrer Spikepins unterscheiden, zu versehen.

Können die als Eisreservoire wirkenden Vertiefungen die Menge an anfallenden Eisspänen nicht vollständig aufnehmen, sammeln sich die Eisspäne zwischen dem Laufstreifen und der Fahrbahn, wodurch die Verzahnung der Spikes im Eis nicht optimal funktioniert und dementsprechend der Eisgriff leidet. Andererseits wirkt sich ein unnötig großes Volumen der vorgesehenen Vertiefungen nachteilig auf die Eisgriffeigenschaften der Profilpositive des Laufstreifens aus, da zu großflächige Vertiefungen die Gummioberfläche der Profilelemente merklich reduzieren.

Der Erfindung liegt die Aufgabe zugrunde, einen Fahrzeugluftreifen zur Verfügung zu stellen, welcher einen mit Spikes versehen Laufstreifen aufweist und dessen Griff- und Fahreigenschaften weiter und merklich verbessert sind.

Gelöst wird die gestellte Aufgabe dadurch, dass in den Profilelementen in unmittelbarer Nähe der Spikes Vertiefungen zur Aufnahme der beim Kratzen der Spikes auf Eis entstehenden Eispartikel ausgebildet sind, wobei sich die Vertiefungen bei Spikes des ersten Typs von den Vertiefungen bei Spikes des zweiten Typs derart in ihrer Form und/oder ihrer Position relativ zum Spike unterscheiden, dass beim Fahren auf Eis die Vertiefungen bei den Spikes des ersten Typs vermehrt die unter dem Einfluss von Seitenkräften anfallenden Eispartikel und die Vertiefungen bei den Spikes des zweiten Typs vermehrt die unter den Einfluss von Umfangskräften anfallenden Eispartikel aufnehmen, wobei bei Spikes des ersten Typs seitliche Vertiefungen vorgesehen sind, welche im Bereich der zu näher befindlichen Reifenschulter liegenden Seite des Spikes ausgebildet sind, und wobei bei Spikes des zweiten Typs Vertiefungen vorgesehen sind, welche sich in Kreissektoren befinden, die durch den jeweiligen Spike voneinander getrennt einander diametral gegenüberliegen und sich bezogen auf die Hauptachse des Spikes über einen Zentriwinkel erstrecken, welcher relativ zur Umfangsrichtung +/- 35° beträgt.

Bei einem gemäß der Erfindung ausgeführten Fahrzeugluftreifen sind im Laufstreifen Spikes eines ersten Typs und Spikes eines zweiten Typs vorgesehen. Die Spikes des ersten Typs bewirken eine bessere Seitenkraftübertragung als die Spikes des zweiten Typs, welche eine bessere Umfangskraftübertragung, also eine bessere Übertragung von Brems- und Traktionskräften, bewirken als die Spikes des ersten Typs. Die Anordnung und/oder Ausgestaltung der bei den beiden Spiketypen vorgesehenen Vertiefungen ist gemäß der Erfindung auf den jeweiligen Spiketyp in besonders vorteilhafter Weise angepasst. Die Vertiefungen bei den Spikes des ersten Typs sind derart angeordnet, dass sie vermehrt die unter dem Einfluss von Seitenkräften anfallenden Eispartikel aufnehmen, die Vertiefungen bei den Spikes des zweiten Typs sind derart angeordnet, dass sie vermehrt die unter den Einfluss von Umfangskräften anfallenden Eispartikel aufnehmen. Ein erfindungsgemäßer Reifen weist daher Spikes unterschiedlicher Wirkmechanismen und mit an diese Wirkmechanismen auf besonders vorteilhafte Weise angepassten, als Eisreservoire wirkenden Vertiefungen auf, wodurch die Eisgriffeigenschaften des Reifens - gegenüber den bekannten Ausführungen - deutlich verbessert sind.

Gemäß einer bevorzugten Ausführungsvariante weist bzw. weisen die Vertiefung(en), welche jeweils bei einem Spike des ersten Typs ausgebildet ist bzw. sind, bei mehreren Vertiefungen in Summe, ein größeres Volumen auf als die Vertiefung(en), welche bei einem Spike des zweiten Typs ausgebildet ist bzw. sind. Diese Maßnahme ist insbesondere deswegen vorteilhaft, weil bei Spikes des ersten Typs tendenziell mehr Eispartikel anfallen als bei Spikes des zweiten Typs.

Gemäß einer weiteren bevorzugten Ausführungsvariante sind Spikes des ersten Typs vorgesehen, bei welchen der Spikepin in Draufsicht langgestreckt ist und eine in seiner Längserstreckung ausgerichtete, zur axialen Richtung unter einem Winkel von 0° bis 20° verlaufende Symmetrieebene aufweist, wobei die Symmetrieebene des Spikepins vorzugsweise gleichzeitig die Symmetrieebene zumindest einer in unmittelbarer Nähe des zugehörigen Spikes ausgebildeten Vertiefung ist. Durch diese "doppelt-symmetrische" Gestaltung ist das "Zusammenwirken" von Spikepin und Vertiefung im Hinblick auf die Wirksamkeit der Vertiefungen unter dem Einfluss von Seitenführungskräften weiter verbessert.

Dieses Zusammenwirken wird dann noch weiter verbessert, wenn bei dieser bevorzugten Ausführungsvariante zumindest eine Vertiefung vorgesehen ist, welche sich innerhalb eines bezüglich der Symmetrieebene des Spikepins symmetrisch ausgebildeten Kreissektors befindet, welcher sich bezüglich der Hauptachse des zugehörigen Spikes über einen Zentriwinkel von 70° erstreckt.

Bevorzugt ist ferner eine Ausführung, bei welcher in unmittelbarer Nähe von Spikes des ersten Typs jeweils zwei Vertiefungen ausgebildet sind, welche durch den jeweiligen Spike voneinander getrennt einander diametral gegenüberliegen, wobei die Symmetrieebene des Spikepins gleichzeitig die Symmetrieebene der zwei Vertiefungen ist. Durch diese Maßnahme werden die unter dem Einfluss von Seitenführungskräften anfallenden Eispartikel besonders zuverlässig aufgenommen.

Ebenfalls ist es von Vorteil, wenn in unmittelbarer Nähe von Spikes des ersten Typs jeweils genau eine Vertiefung ausgebildet ist, welche sich innerhalb eines Kreissektor befindet, der sich symmetrisch zur Symmetrieebene des jeweiligen Spikepins und bezogen auf die Hauptachse des Spikes über einen Zentriwinkel von 180° erstreckt und wobei sich die Vertiefung selbst über einen Zentriwinkel von zumindest 120°, insbesondere von mindestens 160°, und bevorzugt von 180°, erstreckt. Eine derart ausgeführte Vertiefung weist einen relativ großen "Einzugsbereich" für die anfallende Eispartikel auf.

Gemäß einer weiteren bevorzugten Ausführungsvariante sind Spikes des ersten Typs vorgesehen, bei welchen der Spikepin in Draufsicht langgestreckt ist und eine in seiner Längserstreckung ausgerichtete, zur axialen Richtung unter einem Winkel von 0° bis 20° verlaufende Symmetrieebene aufweist, wobei in unmittelbarer Nähe der Spikes Vertiefungen ausgebildet sind, welche durch den jeweiligen Spike voneinander getrennt einander diametral gegenüberliegen und in Draufsicht vorzugsweise eine Symmetrieebene aufweisen, welche senkrecht auf die Symmetrieebene des Spikepins steht. Dadurch lässt sich die Eisgriffwirkung der Spikes des ersten Typs weiter verbessern.

Besonders vorteilhaft ist es, wenn bei dieser Ausführungsvariante der Laufstreifen eine laufrichtungsgebunden ausgeführte Profilierung aufweist, wobei jene Vertiefung(en), welche beim Abrollen den Reifens bei Vorwärtsfahrt zuerst in den Untergrund eintritt bzw. eintreten, einen geringeren Abstand zur Reifenäquatorialebene aufweist bzw. aufweisen als die diametral gegenüberliegende(n) Vertiefung(en).

Es ist dabei zusätzlich von Vorteil, wenn bei den Spikes des zweiten Typs ausschließlich Vertiefungen vorgesehen sind, welche sich in den Kreissektoren befinden, wobei diese Vertiefungen vorzugsweise durch den Spike voneinander getrennt einander diametral gegenüberliegen.

Eine weitere bevorzugte Ausführungsvariante ist dadurch gekennzeichnet, dass Spikes des zweiten Typs vorgesehen sind, bei welchen der Spikepin in Draufsicht langgestreckt und in axialer Richtung orientiert ist und eine in Umfangsrichtung ausgerichtete Symmetrieebene aufweist, welche vorzugsweise gleichzeitig die Symmetrieebene der beim jeweiligen Spike ausgebildeten Vertiefungen ist. Durch diese "doppelt-symmetrische" Gestaltung ist das Zusammenwirken von Spikepin und Vertiefung im Hinblick auf die Wirksamkeit der Vertiefungen unter dem Einfluss von Umfangskräften weiter verbessert.

Ein vorteilhaft gestalteter Fahrzeugluftreifen mit besonders guten Eisgriffeigenschaften - sowohl unter der Wirkung von Seitenkräften als auch unter der Wirkung von Umfangskräften - ist dadurch gekennzeichnet, dass die Spikes derart über den Umfang des Laufstreifens verteilt sind, dass sich beim Abrollen des Reifens im Latsch jeweils zumindest zwei Spikes des ersten Typs und zumindest zwei Spikes des zweiten Typs befinden.

In diesem Zusammenhang ist es ferner vorteilhaft, wenn die Spikes derart über den Umfang des Laufstreifens verteilt sind, dass das Verhältnis der Anzahl der Spikes des ersten Typs zur Anzahl der Spikes des zweiten Typs innerhalb der Bodenaufstandsfläche 1:1 bis 1:3 beträgt.

Gemäß einer weiteren bevorzugten Ausführungsvariante sind Spikes des zweiten Typs vorgesehen, bei welchen der Spikekörper eine durch zwei Ausnehmungen unterbrochene Oberseite aufweist, wobei die Ausnehmungen durch den Spikepin voneinander getrennt einander gegenüberliegen und wobei der Spike vorzugsweise derart im Laufstreifen eingesetzt ist, dass die Ausnehmungen in Draufsicht den in unmittelbarer Nähe des Spikes ausgebildeten Vertiefungen zugeordnet sind. Solche am Spikekörper ausgebildeten Ausnehmungen wirken einerseits selbst als Eisreservoire und begünstigen andererseits die Ab- bzw. Weiterleitung der Eisspäne in die zugeordneten Vertiefungen.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1a eine Draufsicht auf einen Spike eines ersten Typs,
Fig. 1b eine verkleinerte Seitenansicht des Spikes aus Fig. 1a gemäß der durch den Pfeil P_{1b} angedeuteten Sichtrichtung,
Fig. 1c eine verkleinerte Seitenansicht des Spikes aus Fig. 1a gemäß der durch den Pfeil P_{1c} angedeuteten Sichtrichtung,
Fig. 2a eine Draufsicht auf einen Spike eines zweiten Typs,
Fig. 2b eine verkleinerte Seitenansicht des Spikes aus Fig. 2a gemäß der durch den Pfeil P_{2b} angedeuteten Sichtrichtung,
Fig. 2c eine verkleinerte Seitenansicht des Spikes aus Fig. 2a gemäß der durch den Pfeil P_{2c} angedeuteten Sichtrichtung,
Fig. 3 eine Draufsicht auf einen Ausschnitt eines Laufstreifens eines Fahrzeugluftreifens mit Spikes beider Typen,
Fig. 3a eine vergrößerte Draufsicht auf einen Ausschnitt des Laufstreifens aus Fig. 3 im Bereich eines Spikes des ersten Typs,
Fig. 3b eine vergrößerte Draufsicht auf einen Ausschnitt des Laufstreifens aus Fig. 3 im Bereich eines Spikes des zweiten Typs,
Fig. 4a eine vergrößerte Draufsicht auf einen Ausschnitt eines Laufstreifens im Bereich eines Spikes des ersten Typs gemäß einer ersten weiteren Variante und
Fig. 5a eine vergrößerte Draufsicht auf einen Ausschnitt eines Laufstreifens im Bereich eines Spikes des ersten Typs gemäß einer zweiten weiteren Variante.

Gemäß der Erfindung ausgeführte Fahrzeugluftreifen sind insbesondere Reifen in Radialbauart für Personenkraftwagen, Vans oder Light-Trucks, welche zum Fahren unter winterlichen Fahrbedingungen besonders gut geeignet sind. Die Erfindung befasst sich mit Spikes zweier unterschiedlicher Spiketypen, welche in Profilelementen des Laufstreifens verankert sind, und mit in unmittelbarer Nähe zu den Spikes ausgebildeten Vertiefungen, welche als Ableitkanäle bzw. Reservoire für die beim Fahren auf Eis anfallenden Eispartikel dienen. Der eine Spiketyp ist insbesondere hinsichtlich einer guten Seitenkraftübertragung ausgestaltet, der andere Spiketyp insbesondere hinsichtlich einer guten Umfangskraftübertragung, also einer guten Übertragung von Brems- und Traktionskräften, wie nachfolgend näher beschrieben wird.

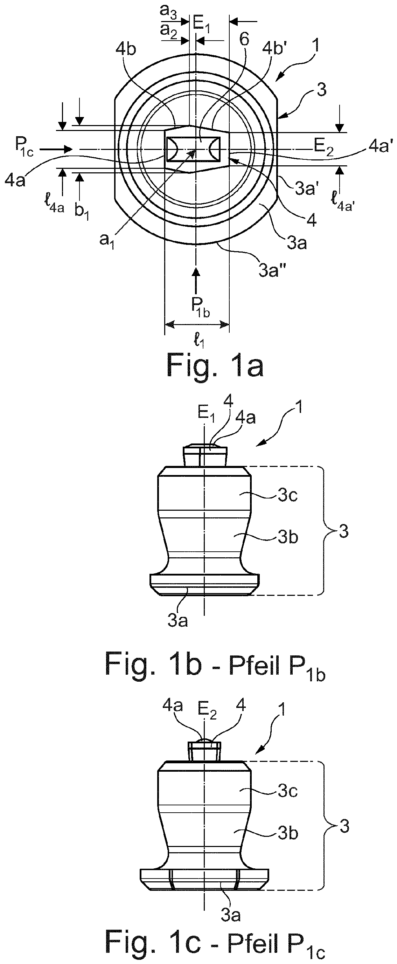

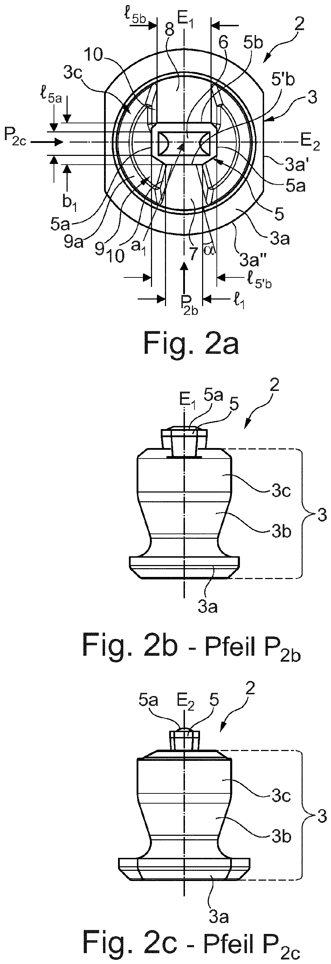

Fig. 1a bis Fig. 1c zeigen Ansichten einer bevorzugten Ausführungsvariante eines Spikes 1 eines ersten Typs. Fig. 2a bis Fig. 2c zeigen analoge Ansichten auf eine bevorzugte Ausführungsvariante eines Spikes 2 eines zweiten Typs. Die Position der bei aufrecht stehendem Spike in vertikaler Richtung verlaufenden Hauptachse a₁ der Spikes 1, 2 ist in Fig. 1a und Fig. 2a durch einen Pfeil angedeutet.

Wie Fig. 1a bis Fig. 1c bzw. Fig. 2a bis Fig. 2c zeigen, besteht der Spike 1, 2 aus einem Spikekörper 3 und einem in diesem verankerten Spikepin 4 (Spike 1), 5 (Spike 2). Der Spikekörper 3 weist beim gezeigten Ausführungsbeispiel einen Fußflansch 3a, einen taillierten Mittelteil 3b (Fig. 1b, Fig. 1c, Fig. 2b, Fig. 2c) und einen Oberflansch 3c auf. Der Mittelteil 3b und der Oberflansch 3c sind zumindest im Wesentlichen rotationssymmetrisch, der Fußflansch 3a weist in Draufsicht (Fig. 1a, Fig. 2a) eine im Wesentlichen ovale Form und zwei in der längeren Erstreckung des Ovals parallel zueinander verlaufende, ebene Seitenflächen 3a' (Fig. 1a, Fig. 2a) und zwei einander gegenüberliegende gerundete Seitenflächen 3a" (Fig. 1a, Fig. 2a) auf. Wie Fig. 1a und Fig. 2a zeigen, weist der Fußflansch 3a eine in seiner Längserstreckung ausgerichtete, parallel zu den ebenen Seitenflächen 3a' und durch die Hauptachse a₁ des Spikes 1, 2 verlaufende Symmetrieebene E₁ sowie eine durch die Hauptachse a₁ und orthogonal zur Symmetrieebene E₁ verlaufende zweite Symmetrieebene E₂ auf.

Der Spikepin 4 und der Spikepin 5 sind in Draufsicht längliche Bauteile mit einer größten Länge l₁ und einer größten Breite b₁, wobei l₁ > b₁ gilt und wobei der Spikepin 4, 5 derart im Spikekörper 3 verankert ist, dass er in Draufsicht in Erstreckungsrichtung der zweiten Symmetrieebene E₂ langgestreckt ist. Sowohl der Spikepin 4 als auch der Spikepin 5 weisen an ihrer Oberseite eine sogenannte Abriebschutzkuppel 6 auf, die nicht Gegenstand der Erfindung ist und in üblicher Weise ausgeführt sein kann.

Wie Fig. 1a zeigt, ist der Spikepin 4 bezüglich der bereits erwähnten Symmetrieebene E₂ symmetrisch, sodass diese gleichzeitig eine Symmetrieebene des Spikepins 4 ist. Der Spikepin 4 weist in Draufsicht die Gestalt von zwei an ihrer Basis zusammengefügten, unterschiedliche Höhen aufweisenden gleichschenkeligen Trapezen auf, wobei sich die Stelle mit der größte Breite b₁ an der gemeinsamen Basis der Trapeze befindet und wobei diese Stelle in Fig. 1a gegenüber der Symmetrieebene E₁ um einen Abstand a₂ nach links versetzt ist. An seinem äußeren Umfang weist der Spikepin 4 zwei senkrecht zur Symmetrieebene E₂ verlaufende Griffkanten 4a, 4a`, ferner zwei Griffkanten 4b, welche die Trapezschenkel des Trapezes mit der geringeren Höhe bilden, und zwei Griffkanten 4b`, welche die Trapezschenkel des Trapezes mit der größeren Höhe bilden, auf. Die Griffkante 4a befindet sich näher zur breitesten Stelle des Spikepins 4 als die Griffkante 4a' und weist eine Länge l₄ₐ auf, die um 0,1 mm bis 0,3 mm größer ist als die Länge l_{4a'} der Griffkante 4a`. Die Breite b₁ des Spikepins 4 ist um 0,1 mm bis 0,3mm größer als die Länge l₄ₐ der Griffkante 4a. Jede Griffkante 4b schließt mit der jeweiligen Griffkante 4b' einen stumpfen Winkel ein, wobei sich ihre Schnittstellen im bereits erwähnten Abstand a₂ von der Symmetrieebene E₁ sowie in einem Abstand a₃ von vorzugsweise 60% der Länge l₁ von der Griffkante 4a' befinden.

Wie Fig. 2a zeigt, ist der Spikepin 5 des Spikes 2 des zweiten Typs bezüglich der bereits erwähnten Symmetrieebene E₁ symmetrisch, sodass diese gleichzeitig eine Symmetrieebene des Spikepins 5 ist. Der Spikepin 5 ist in Draufsicht nahezu rechteckig, wobei die Eckbereiche abgeschrägt sind. An seinem äußeren Umfang weist der Spikepin 5 zwei parallel sowie symmetrisch zur Symmetrieebene E₁ verlaufende gleichlange gerade Griffkanten 5a und zwei senkrecht zur Symmetrieebene E₁ orientierte, ungleichlange gerade Griffkanten 5b, 5'b auf. Die größte Länge l₁ des Spikepins 5 ist durch den gegenseitigen Abstand der Griffkanten 5a, die größte Breite b₁ des Spikepins 5 ist durch den gegenseitigen Abstand der Griffkanten 5b und 5'b bestimmt. Die beiden Griffkanten 5a weisen eine Länge l₅ₐ auf, welche kleiner ist als die Längen l_{Sb}, l_{5'b} der Griffkanten 5b, 5`b, wobei bei der gezeigten Ausführung die Länge l_{5'b} bei der in Fig. 2a unteren Griffkante 5'b um 0,5 mm bis 1,0 mm kleiner ist als die Länge l_{5b} der in Fig. 2a oberen Griffkante 5b.

Der Oberflansch 3c des Spikes 2 des zweiten Typs weist eine durch zwei Ausnehmungen 7, 8 unterbrochene und ansonsten ebene, parallel zum Fußflansch 3a bzw. dessen Oberseite verlaufende Oberseite 9 auf, die außenseitig von schmalen, Richtung Fußflansch 3a schräg abfallend verlaufenden Randabschnitten 9a begrenzt ist. Die Ausnehmungen 7, 8 sind in Draufsicht jeweils symmetrisch bezüglich der Symmetrieebene E₁ ausgeführt, daher bezüglich der Hauptachse a₁ zueinander um 180° versetzt und liegen einander somit durch den Spikepin 5 getrennt gegenüber. Ferner erstrecken sich die Ausnehmungen 7, 8 vom Spikepin 5 bis zum Rand des Oberflansches 3c, an welchem sie offen enden, und weisen jeweils eine parallel zur Hauptachse a₁ ermittelte Tiefe von 0,5 mm bis 2,0 mm auf. Jede Ausnehmung 7, 8 ist in Draufsicht im Wesentlichen U-förmig und durch zwei, jeweils einen Schenkel der U-Form bildende, bis zum Spikepin 4 verlaufende, ebene Begrenzungswände 10 begrenzt. Die Begrenzungswände 10 der Ausnehmung 7 verlaufen in Draufsicht unter einem Winkel α von insbesondere bis zu 20° zur Symmetrieebene E₁, wobei die Ausnehmung 7 ausgehend vom Spikepin 4 in Richtung ihres offenen Endes am Rand des Oberflansches 3c kontinuierlich breiter wird. Die Begrenzungswände 10 der Ausnehmung 8 verlaufen in Draufsicht im Wesentlichen parallel zur Symmetrieebene E₁. Das Volumen der Ausnehmung 8 ist größer als das Volumen der Ausnehmung 7, wobei die unterschiedlichen Volumina für deren Funktion als Eisreservoire von Vorteil sind.

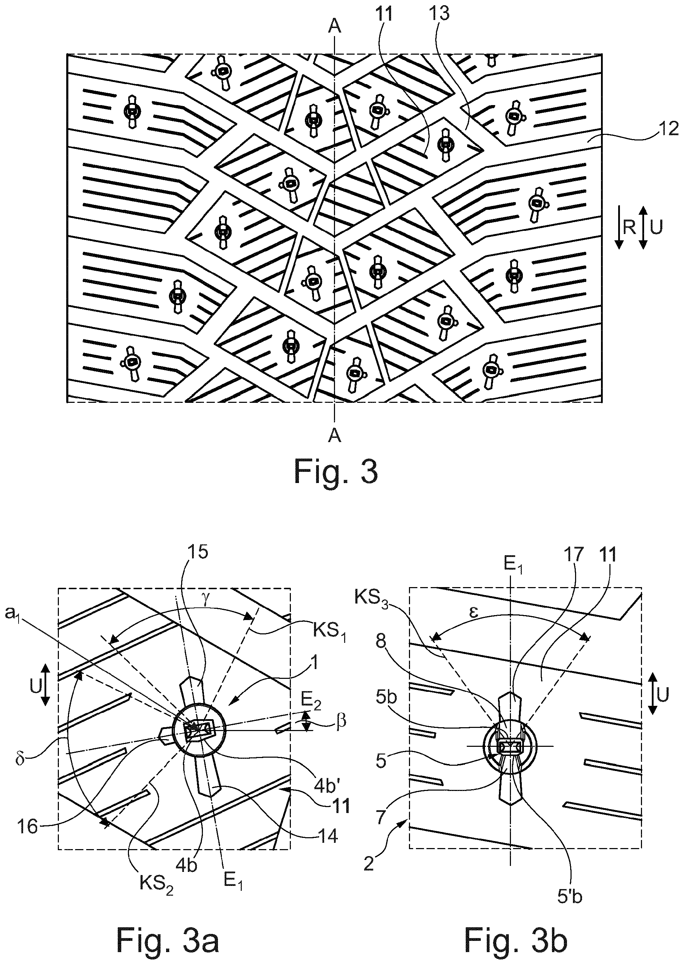

Fig. 3 zeigt einen Umfangsabschnitt eines mit einer Vielzahl von Spikes 1, 2 versehenen Laufstreifens mit einer laufrichtungsgebundenen Profilierung, wobei der Fahrzeugluftreifen derart am Fahrzeug zu montieren ist, dass er die durch den Pfeil R symbolisierte Abrollrichtung bei Vorwärtsfahrt aufweist. Die Äquatorialebene des Reifens ist durch eine gestrichelte Linie A-A und die Umfangsrichtung ist durch einen Doppelpfeil U gekennzeichnet.

Der lediglich beispielhaft gezeigte Laufstreifen weist Profilblöcke 11 auf, welche durch V-förmig über die Breite des Laufstreifens verlaufende Schrägrillen 12 und von zwischen diesen verlaufenden kurzen Rillen 13 begrenzt sind.

Die Spikes 1, 2 sind beim gezeigten Ausführungsbeispiel derart über den Umfang des Laufstreifens verteilt, dass sich beim Abrollen des Reifens in jeder sich zum Untergrund einstellenden Bodenaufstandsfläche, also im sogenannten "Latsch", immer zumindest zwei Spikes 1 und zumindest zwei Spikes 2 befinden, wobei die Bodenaufstandsfläche dem statisch ermittelten Footprint (ermittelt mit einem auf einer Normfelge montierten Reifen, Last bei 70 % der maximalen Tragfähigkeit, Innendruck 85 % des Normdruckes, gemäß ETRTO-Standards) entspricht. Bevorzugter Weise befinden sich im Latsch in jeder Laufstreifenhälfte zumindest zwei Spikes 1 und zumindest zwei Spikes 2. Ferner ist es bevorzugt, wenn das Verhältnis der Anzahl der Spikes 1 des ersten Typs zur Anzahl der Spikes 2 des zweiten Typs im Latsch 1:1 bis 1:3 beträgt.

Wie Fig. 1a in Kombination mit Fig. 3 und 3a zeigt, sind die Spikes 1 des ersten Typs derart orientiert in den Laufstreifen eingesetzt, dass die Symmetrieebene E₂ zur axialen Richtung unter einem Winkel β von 0° bis 20°, insbesondere von 5° bis 15°, verläuft, wobei beim Abrollen des Reifens bei Vorwärtsfahrt die Griffkanten 4b, welche die Trapezschenkel des Trapezes mit der geringeren Höhe bilden, vor der jeweils anschließenden Griffkante 4b` in den Untergrund eintreten. Besonders bevorzugter Weise sind die Spikes 1 derart in den Laufstreifen eingesetzt, dass jene der beiden Griffkanten 4b, welche beim Abrollen des Reifens bei Vorwärtsfahrt zuerst in den Untergrund eintritt, in axialer Richtung orientiert ist.

Die Positionierung der Spikes 1 erfolgt daher vorzugsweise derart, dass die Spikes 1 in der einen Laufstreifenhälfte gegenüber den Spikes 1 in der anderen Laufstreifenhälfte bezogen auf die Reifenumfangsrichtung eine zueinander gegensinnige Neigung der Symmetrieebenen E₁, E₂ aufweisen (Fig. 3).

Wie insbesondere Fig. 3a ferner zeigt, sind beim gezeigten Ausführungsbeispiel im jeweiligen Profilblock 11 um den Spike 1 drei oberflächliche Vertiefungen 14, 15, 16 ausgebildet, welche als Eisreservoire dienen. Die Vertiefungen 14 und 15 befinden sich jeweils innerhalb eines bezüglich der Symmetrieebene E₁ symmetrisch ausgebildeten Kreissektors KS₁ (nur für die Vertiefung 15 gezeigt), wobei die beiden Kreissektoren KS₁ durch den Spike 1 voneinander getrennt diametral gegenüberliegen und sich bezogen auf die Hauptachse a₁ des Spikes 1 jeweils über einen Zentriwinkel γ von 70°erstrecken. Ferner sind die Vertiefungen 14, 15 bezüglich der Symmetrieebene E₁ symmetrisch ausgeführt sowie in Erstreckungsrichtung der Symmetrieebene E₁ langgestreckt, wobei beim Abrollen des Reifens bei Vorwärtsfahrt die Vertiefung 14 vor der Vertiefung 15 in den Untergrund eintritt. Die Vertiefung 16 befindet sich an der zu näher befindlichen Reifenschulter liegenden Seite des Spikes 1 sowie innerhalb eines bezüglich der Symmetrieebene E₂ symmetrisch ausgebildeten Kreissektors KS₂, welcher sich bezogen auf die Hauptachse a₁ des Spikes 1 über einen Zentriwinkel δ von 70° erstreckt. Ferner ist die Vertiefung 16 bezüglich der Symmetrieebene E₂ symmetrisch ausgeführt. Die Vertiefungen 14, 15, 16 weisen in Draufsicht jeweils eine deltoidähnliche Gestalt. Das Volumen der Vertiefung 14 ist größer als jenes der Vertiefung 15, welche ein Volumen aufweist, welches größer ist als jenes der Vertiefung 16. Analoges gilt für die in den Symmetrieebenen E₁, E₂ ermittelte Erstreckungslängen der Vertiefungen 14, 15, 16.

Wie Fig. 2a in Kombination mit Fig. 3 und 3b zeigt, sind die Spikes 2 des zweiten Typs derart orientiert in den Laufstreifen eingesetzt, dass der Spikepin 5 in axialer Richtung und die Symmetrieebene E₁ in Umfangsrichtung U ausgerichtet ist, wobei beim Abrollen des Reifens bei Vorwärtsfahrt die Griffkante 5'b des Spikepins 5 und die Vertiefung 7 vor der Griffkante 5b des Spikepins 5 und Vertiefung 8 in den Untergrund eintreten. Die Griffkante 5'b ist daher die sogenannte einlaufende Griffkante bzw. die sogenannte "leading edge" und die Griffkante 5b ist die sogenannte auslaufende Griffkante bzw. die sogenannte "trailing edge".

Wie insbesondere Fig. 3b zeigt, sind im jeweiligen Profilblock 11 um den Spike 2 zwei ebenfalls als Eisreservoire dienende, oberflächliche Vertiefungen 17 ausgebildet, welche sich in Kreissektoren KS₃ befinden, welche durch den Spike 1 getrennt einander diametral gegenüberliegen, bezüglich der Symmetrieebene E₁ symmetrisch sind und sich bezüglich der Hauptachse a₁ des Spikes 1 jeweils über einen Zentriwinkel ε von 70°erstrecken. Die Vertiefungen 17 sind beispielsweise ebenfalls deltoidförmig ausgeführt und in Erstreckungsrichtung der Symmetrieebene E₁ langgestreckt.

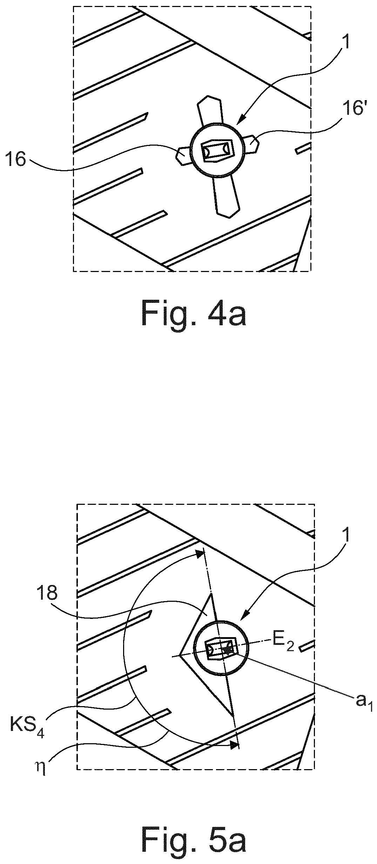

Fig. 4a und Fig. 5a zeigen Varianten für die als Eisreservoire dienen Vertiefungen im Bereich eines Spikes 1 des ersten Typs. Die Variante in Fig.4a unterscheidet sich von jener der Fig. 3a lediglich dadurch, dass zusätzlich eine Vertiefung 16' beim Spikes 1 ausgebildet ist, welche analog zur Vertiefung 16 ausgeführt ist und dieser diametral durch den Spikes 1 getrennt gegenüberliegt.

Bei der in Fig. 5a gezeigten Variante ist beim Spike 1 eine Vertiefung 18 ausgebildet, welche sich an der zu näher befindlichen Reifenschulter liegenden Seite des Spikes 1 befindet und innerhalb eines Kreissektors KS₄ ausgebildet ist, welcher sich bezogen auf die Hauptachse a₁ des Spikes 1 über einen Zentriwinkel η von 180° erstreckt und in Draufsicht dreieckartig ausgeführt ist, wobei die gedachte Hypotenuse des Dreieckes durch die Hauptachse a₁ des Spikes 1 verläuft. Bevorzugter Weise ist Vertiefung 18 bezüglich der Symmetrieebene E₂ symmetrisch ausgeführt. Ferner kann die Vertiefung 18 in Draufsicht die Form eines Kreisringabschnittes aufweisen.

Die Vertiefungen 14, 15, 16, 16', 17, 18 weisen an ihrer tiefsten Stelle eine Tiefe von vorzugsweise 0,5 mm bis 5,0 mm, insbesondere von bis zu 2,0 mm, auf.

Die Erfindung ist auf die beschriebenen und dargestellten Ausführungsvarianten nicht beschränkt.

Die Profilierung des Laufstreifens eines erfindungsgemäßen Reifens kann auch nicht laufrichtungsgebunden ausgeführt sein. Die Profilelemente des Laufstreifens können Profilblöcke, Profilbänder oder dergleichen sein. Die Spikes und die Vertiefungen können eine von der beschriebenen Ausgestaltung abweichende Gestalt aufweisen.

Im Rahmen der gegenständlichen Erfindung wird unter einer "in unmittelbarer Nähe vom jeweiligen Spike ausgebildete Vertiefung" eine solche verstanden, welche an den Spike angrenzt oder zu diesem einen Abstand von höchstens 1,5 mm aufweist.

### Bezugszeichenliste

- 1: Spike
- 2: Spike
- 3: Spikekörper
- 3a: Fußflansch
- 3a', 3a": Seitenflächen
- 3b: Mittelteil
- 3c: Oberflansch
- 4: Spikepin
- 4a, 4a',4b, 4b': Griffkante
- 5: Spikepin
- 5a, 5b, 5b': Griffkante
- 6: Abriebschutzkuppel
- 7, 8: Ausnehmung
- 9: Oberseite
- 9a: Randabschnitt
- 10: Begrenzungswand
- 11: Profilblock
- 12: Schrägrille
- 13: Rille
- 14, 15, 16, 16', 17, 18: Vertiefung
- a₁: Hauptachse
- a₂, a₃: Abstand
- A: Doppelpfeil (axiale Richtung)
- A-A: Linie (Reifenäquatorialebene)
- b₁: größte Breite
- E₁, E₂: Symmetrieebene
- KS₁, KS₂, KS₃, KS₄: Kreissektor
- l₁: größte Länge
- l₄ₐ, l_{4a'}, l₅ₐ, l_{5b}, l_{5b}: Länge
- R: Pfeil (Abrollrichtung)
- U: Doppelpfeil (Umfangsrichtung)
- α, β: Winkel
- γ, δ, ε, η: Zentriwinkel

## Patentansprüche

1. Fahrzeugluftreifen mit einem Laufstreifen mit Profilelementen (11) mit Spikes (1, 2), welche jeweils einen in einem Profilelement (11) verankerten Spikekörper (3) und einen in diesem positionierten Spikepin (4, 5) aufweisen, wobei Spikes (1, 2) eines ersten Typs und eines zweiten Typs vorgesehen sind, welche sich zumindest in der Ausgestaltung ihrer Spikepins (4, 5) voneinander unterscheiden, wobei die Spikes (1) des ersten Typs eine bessere Seitenkraftübertragung bewirken als die Spikes (2) des zweiten Typs, welche eine bessere Umfangskraftübertragung bewirken als die Spikes (1) des ersten Typs,
**dadurch gekenzeichnet,**
dass in den Profilelementen (11) in unmittelbarer Nähe der Spikes (1, 2) Vertiefungen (14, 15, 16, 16', 17, 18) zur Aufnahme der beim Kratzen der Spikes (1, 2) auf Eis entstehenden Eispartikel ausgebildet sind,
wobei sich die Vertiefungen (14, 15, 16, 16', 18) bei Spikes (1) des ersten Typs von den Vertiefungen (17) bei Spikes (2) des zweiten Typs derart in ihrer Form und/oder ihrer Position relativ zum Spike (1, 2) unterscheiden,
dass beim Fahren auf Eis die Vertiefungen (14, 15, 16, 16' 18) bei den Spikes (1) des ersten Typs vermehrt die unter dem Einfluss von Seitenkräften anfallenden Eispartikel und die Vertiefungen (17) bei den Spikes (2) des zweiten Typs vermehrt die unter den Einfluss von Umfangskräften anfallenden Eispartikel aufnehmen,
wobei bei Spikes (1) des ersten Typs seitliche Vertiefungen (16, 16', 18) vorgesehen sind, welche im Bereich der zu näher befindlichen Reifenschulter liegenden Seite des Spikes (1) ausgebildet sind, und
wobei bei Spikes (2) des zweiten Typs Vertiefungen (17) vorgesehen sind, welche sich in Kreissektoren (KS₃) befinden, die durch den jeweiligen Spike (2) voneinander getrennt einander diametral gegenüberliegen und sich bezogen auf die Hauptachse (a₁) des Spikes (1, 2) über einen Zentriwinkel (ε) erstrecken, welcher relativ zur Umfangsrichtung (U) +/- 35° beträgt.

2. Fahrzeugluftreifen nach Anspruch 1, **dadurch gekennzeichnet, dass** die Vertiefung(en) (14, 15, 16, 16', 18), welche jeweils bei einem Spike (1) des ersten Typs ausgebildet ist bzw. sind, bei mehreren Vertiefungen (14, 15, 16) in Summe, ein größeres Volumen aufweist bzw. aufweisen als die Vertiefung(en) (17), welche bei einem Spike (2) des zweiten Typs ausgebildet ist bzw. sind.

3. Fahrzeugluftreifen nach Anspruch 1 oder 2, **dadurch gekennzeichnet, dass** Spikes (1) des ersten Typs vorgesehen sind, bei welchen der Spikepin (4) in Draufsicht langgestreckt ist und eine in seiner Längserstreckung ausgerichtete, zur axialen Richtung unter einem Winkel (β) von 0° bis 20° verlaufende Symmetrieebene (E₂) aufweist, wobei die Symmetrieebene (E₂) des Spikepins (4) vorzugsweise gleichzeitig die Symmetrieebene zumindest einer in unmittelbarer Nähe des zugehörigen Spikes (1) ausgebildeten Vertiefung (16, 16', 18) ist.

4. Fahrzeugluftreifen nach Anspruch 3, **dadurch gekennzeichnet, dass** zumindest eine Vertiefung (16, 16') vorgesehen ist, welche sich innerhalb eines bezüglich der Symmetrieebene (E₂) des Spikepins (4) symmetrisch ausgebildeten Kreissektors (KS₂) befindet, welcher sich bezüglich der Hauptachse (a₁) des zugehörigen Spikes (1) über einen Zentriwinkel (δ) von 70° erstreckt.

5. Fahrzeugluftreifen nach Anspruch 3 oder 4, **dadurch gekennzeichnet, dass** in unmittelbarer Nähe von Spikes (1) des ersten Typs jeweils zwei Vertiefungen (16, 16') ausgebildet sind, welche durch den jeweiligen Spike (1) voneinander getrennt einander diametral gegenüberliegen, wobei die Symmetrieebene (E₂) des Spikepins (4) gleichzeitig die Symmetrieebene der zwei Vertiefungen (16, 16') ist.

6. Fahrzeugluftreifen nach Anspruch 3, **dadurch gekennzeichnet, dass** in unmittelbarer Nähe von Spikes (1) der ersten Typs jeweils genau eine Vertiefung (18) ausgebildet ist, welche sich innerhalb eines Kreissektor (KS₄) befindet, der sich symmetrisch zur Symmetrieebne (E₂) des jeweiligen Spikepins (4) und bezogen auf die Hauptachse (a₁) des Spikes (1) über einen Zentriwinkel (η) von 180° erstreckt und wobei sich die Vertiefung (18) selbst über einen Zentriwinkel von zumindest 120°, insbesondere von mindestens 160°, und bevorzugt von 180°, erstreckt.

7. Fahrzeugluftreifen nach einem der Ansprüche 1 bis 6, **dadurch gekennzeichnet, dass** Spikes (1) des ersten Typs vorgesehen sind, bei welchen der Spikepin (4) in Draufsicht langgestreckt ist und eine in seiner Längserstreckung ausgerichtete, zur axialen Richtung unter einem Winkel (β) von 0° bis 20° verlaufende Symmetrieebene (E₂) aufweist, wobei in unmittelbarer Nähe der Spikes (1) Vertiefungen (14, 15) ausgebildet sind, welche durch den jeweiligen Spike (1) voneinander getrennt einander diametral gegenüberliegen und in Draufsicht vorzugsweise eine Symmetrieebene (E₁) aufweisen, welche senkrecht auf die Symmetrieebene (E₂) des Spikepins (4) steht.

8. Fahrzeugluftreifen nach Anspruch 7, **dadurch gekennzeichnet, dass** der Laufstreifen eine laufrichtungsgebunden ausgeführte Profilierung aufweist, wobei jene Vertiefung(en) (14), welche beim Abrollen den Reifens bei Vorwärtsfahrt (R) zuerst in den Untergrund eintritt bzw. eintreten, einen geringeren Abstand zur Reifenäquatorialebene (A-A) aufweist bzw. aufweisen als die diametral gegenüberliegende(n) Vertiefung(en) (15).

9. Fahrzeugluftreifen nach einem der Ansprüche 1 bis 8, **dadurch gekennzeichnet, dass** bei den Spikes (2) des zweiten Typs ausschließlich Vertiefungen (17) vorgesehen sind, welche sich in den Kreissektoren (KS₃) befinden, wobei diese Vertiefungen (17) vorzugsweise durch den Spike (2) voneinander getrennt einander diametral gegenüberliegen.

10. Fahrzeugluftreifen nach einem der Ansprüche 1 bis 9, **dadurch gekennzeichnet, dass** Spikes (2) des zweiten Typs vorgesehen sind, bei welchen der Spikepin (5) in Draufsicht langgestreckt und in axialer Richtung orientiert ist und eine in Umfangsrichtung (U) ausgerichtete Symmetrieebene (E₁) aufweist, welche vorzugsweise gleichzeitig die Symmetrieebene (E₁) der beim jeweiligen Spike (2) ausgebildeten Vertiefungen (17) ist.

11. Fahrzeugluftreifen nach einem der Ansprüche 1 bis 10, **dadurch gekennzeichnet, dass** die Spikes (1, 2) derart über den Umfang des Laufstreifens verteilt sind, dass sich beim Abrollen des Reifens im Latsch jeweils zumindest zwei Spikes (1) des ersten Typs und zumindest zwei Spikes (2) des zweiten Typs befinden.

12. Fahrzeugluftreifen nach einem der Ansprüche 1 bis 11, **dadurch gekennzeichnet, dass** die Spikes (1, 2) derart über den Umfang des Laufstreifens verteilt sind, dass das Verhältnis der Anzahl der Spikes (1) des ersten Typs zur Anzahl der Spikes (2) des zweiten Typs innerhalb der Bodenaufstandsfläche 1:1 bis 1:3 beträgt.

13. Fahrzeugluftreifen nach einem der Ansprüche 1 bis 12, **dadurch gekennzeichnet, dass** Spikes (2) des zweiten Typs vorgesehen sind, bei welchen der Spikekörper (3) eine durch zwei Ausnehmungen (7, 8) unterbrochene Oberseite (9) aufweist, wobei die Ausnehmungen (7, 8) durch den Spikepin (5) voneinander getrennt einander gegenüberliegen und wobei der Spike (2) vorzugsweise derart im Laufstreifen eingesetzt ist, dass die Ausnehmungen (7, 8) in Draufsicht den in unmittelbarer Nähe des Spikes (2) ausgebildeten Vertiefungen (18) zugeordnet sind.

## Claims

1. Pneumatic vehicle tyre having a tread comprising profile elements (11) with spikes (1, 2), which each have a spike body (3) anchored in a profile element (11) and a spike pin (4, 5) positioned therein, wherein spikes (1, 2) of a first type and of a second type, which differ from one another at least in the design of their spike pins (4, 5), are provided, wherein the spikes (1) of the first type bring about better lateral force transmission than the spikes (2) of the second type, which bring about better circumferential force transmission than the spikes (1) of the first type, **characterized**
**in that** depressions (14, 15, 16, 16', 17, 18) for receiving the ice particles created when the spikes (1, 2) scratch ice are formed in the profile elements (11) in the immediate vicinity of the spikes (1, 2),
wherein the depressions (14, 15, 16, 16', 18) in the case of spikes (1) of the first type differ from the depressions (17) in the case of spikes (2) of the second type in their shape and/or their position relative to the spike (1, 2) such that, when driving on ice, the depressions (14, 15, 16, 16', 18) in the case of the spikes (1) of the first type increasingly receive the ice particles occurring under the influence of lateral forces and the depressions (17) in the case of the spikes (2) of the second type increasingly receive the ice particles occurring under the influence of circumferential forces,
wherein, in the case of spikes (1) of the first type, lateral depressions (16, 16', 18) which are formed in the region of the side of the spike (1) which lies closer to the tyre shoulder are provided, and
wherein, in the case of spikes (2) of the second type, depressions (17) which are situated in circle sectors (KS₃) which lie diametrically opposite one another, being separated from one another by the respective spike (2), and extend over a central angle (ε), with respect to the principal axis (a₁) of the spike (1, 2), which is +/- 35° relative to the circumferential direction (U) are provided.

2. Pneumatic vehicle tyre according to Claim 1, **characterized in that** the depression(s) (14, 15, 16, 16', 18) which is (are) respectively formed in the case of a spike (1) of the first type has (have) a larger volume, in the case of a plurality of depressions (14, 15, 16) in total, than the depression(s) (17) which is (are) formed in the case of a spike (2) of the second type.

3. Pneumatic vehicle tyre according to Claim 1 or 2, **characterized in that** spikes (1) of the first type on which the spike pin (4) is elongated in plan view and has a plane of symmetry (E₂) which is aligned in the longitudinal extent of said pin and extends at an angle (β) of 0° to 20° to the axial direction are provided, wherein the plane of symmetry (E₂) of the spike pin (4) is preferably simultaneously the plane of symmetry of at least one depression (16, 16', 18) formed in the immediate vicinity of the associated spike (1).

4. Pneumatic vehicle tyre according to Claim 3, **characterized in that** at least one depression (16, 16') which is situated within a circle sector (KS₂) which is formed symmetrically with respect to the plane of symmetry (E₂) of the spike pin (4) and which extends over a central angle (δ) of 70° with respect to the principal axis (a₁) of the associated spike (1) is provided.

5. Pneumatic vehicle tyre according to Claim 3 or 4, **characterized in that** two depressions (16, 16') are formed in the immediate vicinity of each of the spikes (1) of the first type, said depressions lying diametrically opposite one another, being separated from one another by the respective spike (1), wherein the plane of symmetry (E₂) of the spike pin (4) is simultaneously the plane of symmetry of the two depressions (16, 16').

6. Pneumatic vehicle tyre according to Claim 3, **characterized in that** precisely one depression (18) is formed in the immediate vicinity of each of the spikes (1) of the first type, said depression being situated within a circle sector (KS₄) which extends symmetrically with respect to the plane of symmetry (E₂) of the respective spike pin (4) and over a central angle (η) of 180° with respect to the principal axis (a₁) of the spike (1), and wherein the depression (18) itself extends over a central angle of 120°, in particular of at least 160°, and preferably of 180°.

7. Pneumatic vehicle tyre according to one of Claims 1 to 6, **characterized in that** spikes (1) of the first type on which the spike pin (4) is elongated in plan view and has a plane of symmetry (E₂) which is aligned in the longitudinal extent of said pin and extends at an angle (β) of 0° to 20° to the axial direction are provided, wherein depressions (14, 15) are formed in the immediate vicinity of the spikes (1), said depressions lying diametrically opposite one another, being separated from one another by the respective spike (1) and, in plan view, preferably having a plane of symmetry (E₁) which is perpendicular to the plane of symmetry (E₂) of the spike pin (4).

8. Pneumatic vehicle tyre according to Claim 7, **characterized in that** the tread has profiling of directional design, wherein the depression(s) (14) which encounters or encounter the underlying surface first as the tyre rolls during forward travel (R) is or are at a shorter distance from the tyre equatorial plane (A-A) than the diametrically opposite depression(s) (15).

9. Pneumatic vehicle tyre according to one of Claims 1 to 8, **characterized in that**, in the case of the spikes (2) of the second type, the depressions (17) provided are exclusively depressions which are situated in the circle sectors (KSs), wherein these depressions (17) preferably lie diametrically opposite one another, being separated from one another by the spike (2).

10. Pneumatic vehicle tyre according to one of Claims 1 to 9, **characterized in that** spikes (2) of the second type on which the spike pin (5) is elongated in plan view and is oriented in the axial direction and has a plane of symmetry (E₁) which is aligned in the circumferential direction (U) and is preferably simultaneously the plane of symmetry (E₁) of the depressions (17) formed in the respective spike (2) are provided.

11. Pneumatic vehicle tyre according to one of Claims 1 to 10, **characterized in that** the spikes (1, 2) are distributed over the circumference of the tread in such a way that in each case at least two spikes (1) of the first type and at least two spikes (2) of the second type are situated in the contact patch during the rolling of the tyre.

12. Pneumatic vehicle tyre according to one of Claims 1 to 11, **characterized in that** the spikes (1, 2) are distributed over the circumference of the tread in such a way that the ratio of the number of spikes (1) of the first type to the number of spikes (2) of the second type within the ground contact area is 1:1 to 1:3.

13. Pneumatic vehicle tyre according to one of Claims 1 to 12, **characterized in that** spikes (2) of the second type on which the spike body (3) has an upper side (9) interrupted by two clearances (7, 8) are provided, wherein the clearances (7, 8) lie opposite one another, being separated by the spike pin (5), and wherein the spike (2) is preferably inserted in the tread in such a way that the clearances (7, 8) are associated in plan view with the depressions (18) formed in the immediate vicinity of the spike (2).

## Revendications

1. Pneumatique de véhicule avec une bande de roulement avec des éléments profilés (11) avec des crampons (1, 2), qui présentent respectivement un corps de crampon (3) ancré dans un élément profilé (11) et une pointe de crampon (4, 5) positionnée dans celui-ci, des crampons (1, 2) d'un premier type et d'un deuxième type étant prévus, qui se distinguent l'un de l'autre au moins par la configuration de leurs pointes de crampon (4, 5), les crampons (1) du premier type assurant une meilleure transmission de la force latérale que les crampons (2) du deuxième type, qui assurent une meilleure transmission de la force périphérique que les crampons (1) du premier type,
**caractérisé en ce que**
des renfoncements (14, 15, 16, 16', 17, 18) sont réalisés dans les éléments profilés (11) à proximité immédiate des crampons (1, 2) pour recevoir les particules de glace qui se forment lors du raclage des crampons (1, 2) sur de la glace,
les renfoncements (14, 15, 16, 16', 18) des crampons (1) du premier type se distinguant des renfoncements (17) des crampons (2) du deuxième type par leur forme et/ou leur position par rapport au crampon (1, 2) de telle sorte que, lors de la conduite sur glace, les renfoncements (14, 15, 16, 16' 18) des crampons (1) du premier type reçoivent davantage les particules de glace produites sous l'effet de forces latérales et les renfoncements (17) des crampons (2) du deuxième type reçoivent davantage les particules de glace produites sous l'effet de forces périphériques,
dans les crampons (1) du premier type, des renfoncements latéraux (16, 16', 18) étant prévus, qui sont réalisés dans la zone du côté du crampon (1) situé le plus près de l'épaulement du pneu, et
dans les crampons (2) du deuxième type, des renfoncements (17) étant prévus, qui se trouvent dans des secteurs circulaires (KS₃) qui sont diamétralement opposés les uns aux autres, séparés les uns des autres par le crampon (2) respectif, et qui s'étendent, par rapport à l'axe principal (a₁) du crampon (1, 2), sur un angle au centre (ε) qui est de +/- 35° par rapport à la direction périphérique (U).

2. Pneumatique de véhicule selon la revendication 1, **caractérisé en ce que** le ou les renfoncements (14, 15, 16, 16', 18), qui sont réalisés respectivement dans un crampon (1) du premier type, présentent, dans le cas de plusieurs renfoncements (14, 15, 16) au total, un volume plus grand que le ou les renfoncements (17), qui sont réalisés dans un crampon (2) du deuxième type.

3. Pneumatique de véhicule selon la revendication 1 ou 2, **caractérisé en ce que** des crampons (1) du premier type sont prévus, dans lesquels la pointe de crampon (4) est allongée en vue de dessus et présente un plan de symétrie (E₂) dirigé dans son extension longitudinale, s'étendant par rapport à la direction axiale selon un angle (β) de 0° à 20°, le plan de symétrie (E₂) de la pointe de crampon (4) étant de préférence en même temps le plan de symétrie d'au moins un renfoncement (16, 16', 18) réalisé à proximité immédiate du crampon (1) correspondant.

4. Pneumatique de véhicule selon la revendication 3, **caractérisé en ce qu'**au moins un renfoncement (16, 16') est prévu, qui se trouve à l'intérieur d'un secteur circulaire (KS₂) réalisé symétriquement par rapport au plan de symétrie (E₂) de la pointe de crampon (4), qui s'étend par rapport à l'axe principal (a₁) du crampon (1) correspondant sur un angle au centre (δ) de 70°.

5. Pneumatique de véhicule selon la revendication 3 ou 4, **caractérisé en ce qu'**à proximité immédiate de crampons (1) du premier type sont réalisés respectivement deux renfoncements (16, 16') qui sont diamétralement opposés l'un à l'autre, séparés l'un de l'autre par le crampon (1) respectif, le plan de symétrie (E₂) de la pointe de crampon (4) étant en même temps le plan de symétrie des deux renfoncements (16, 16').

6. Pneumatique de véhicule selon la revendication 3, **caractérisé en ce qu'**à proximité immédiate de crampons (1) du premier type est réalisé respectivement exactement un renfoncement (18) qui se trouve à l'intérieur d'un secteur circulaire (KS₄), qui s'étend symétriquement au plan de symétrie (E₂) de la pointe de crampons (4) respective et par rapport à l'axe principal (a₁) du crampon (1) sur un angle au centre (η) de 180° et le renfoncement (18) s'étendant lui-même sur un angle au centre d'au moins 120°, notamment d'au moins 160°, et de préférence de 180°.

7. Pneumatique de véhicule selon l'une quelconque des revendications 1 à 6, **caractérisé en ce que** des crampons (1) du premier type sont prévus, dans lesquels la pointe de crampon (4) est allongée en vue de dessus et présente un plan de symétrie (E₂) dirigé dans son extension longitudinale, s'étendant par rapport à la direction axiale selon un angle (β) de 0° à 20°, à proximité immédiate des crampons (1) étant réalisés des renfoncements (14, 15) qui sont diamétralement opposés les uns aux autres, séparés les uns des autres par le crampon (1) respectif, et présentent en vue de dessus de préférence un plan de symétrie (E₁) qui est perpendiculaire au plan de symétrie (E₂) de la pointe de crampon (4).

8. Pneumatique de véhicule selon la revendication 7, **caractérisé en ce que** la bande de roulement présente un profilage conçu sous forme directionnelle, le ou les renfoncements (14) qui, lors du roulement du pneumatique en marche avant (R), pénètrent les premiers dans le sol, présentant une distance par rapport au plan équatorial du pneumatique (A-A) inférieure à celle du ou des renfoncements (15) diamétralement opposés.

9. Pneumatique de véhicule selon l'une quelconque des revendications 1 à 8, **caractérisé en ce que**, dans les crampons (2) du deuxième type, exclusivement des renfoncements (17) qui se trouvent dans les secteurs circulaires (KS₃) sont prévus, ces renfoncements (17) étant de préférence diamétralement opposés les uns aux autres, séparés les uns des autres par le crampon (2).

10. Pneumatique de véhicule selon l'une quelconque des revendications 1 à 9, **caractérisé en ce que** des crampons (2) du deuxième type sont prévus, dans lesquels la pointe de crampon (5) est allongée en vue de dessus et orientée dans la direction axiale et présente un plan de symétrie (E₁) dirigé dans la direction périphérique (U), qui est de préférence en même temps le plan de symétrie (E₁) des renfoncements (17) réalisés dans le crampon (2) respectif.

11. Pneumatique de véhicule selon l'une quelconque des revendications 1 à 10, **caractérisé en ce que** les crampons (1, 2) sont répartis sur la périphérie de la bande de roulement de telle sorte que, lors du roulement du pneumatique, au moins deux crampons (1) du premier type et au moins deux crampons (2) du deuxième type se trouvent respectivement dans le « latsch ».

12. Pneumatique de véhicule selon l'une quelconque des revendications 1 à 11, **caractérisé en ce que** les crampons (1, 2) sont répartis sur la périphérie de la bande de roulement de telle sorte que le rapport entre le nombre de crampons (1) du premier type et le nombre de crampons (2) du deuxième type à l'intérieur de la surface de contact avec le sol est de 1:1 à 1:3.

13. Pneumatique de véhicule selon l'une quelconque des revendications 1 à 12, **caractérisé en ce que** des crampons (2) du deuxième type sont prévus, dans lesquels le corps de crampon (3) présente un côté supérieur (9) interrompu par deux évidements (7, 8), les évidements (7, 8) étant opposés l'un à l'autre, séparés l'un de l'autre par la pointe de crampon (5), et le crampon (2) étant de préférence inséré dans la bande de roulement de telle sorte que les évidements (7, 8) sont associés, en vue de dessus, aux renfoncement (18) réalisés à proximité immédiate du crampon (2).
